# EUROPEAN PATENT APPLICATION

(11) **EP 0 597 798 A1**
(43) Date of publication of application: **18.05.1994**
(21) Application number: 93480168.9
(22) Date of filing: 19.10.1993
(51) Int. Cl.: G06F 15/403, G06F 3/00, G06F 3/16, G06F 3/033

(54) **Method and system for utilizing audible search patterns within a multimedia presentation**

(30) Priority: 13.11.1992 US 976225
(71) Applicant: International Business Machines Corporation, Armonk, N.Y. 10504 (US)
(72) Inventor: Fitzpatrick, Greg P., Fort Worth, Texas 76137 (US); Johnson, William J., Flower Mound, Texas 75028 (US); Williams, Marvin L., Lewisville, Texas 75067 (US)
(74) Representative: de Pena, Alain

(57) **Abstract**

A method and system are disclosed for permitting rapid and efficient searching for a selected segment in a multimedia presentation. An audible utterance to be utilized as a search pattern is identified by a user, either verbally or textually. A text-to-speech conversion is utilized to create an audible search pattern from textual entries. Thereafter, various attributes of the audible utterance may be varied or edited by the user to broaden the effective search pattern. Additionally, the user may specify additional search characteristics, such as maximum amplitude or frequency, to be combined with the search pattern in a Boolean logic relationship in order to further characterize the search pattern. Thereafter, the search pattern may be utilized to identify and locate specific audio utterances within a multimedia presentation. Alternately, the search pattern may be inverted and utilized to search the multimedia presentation in reverse presentation order, greatly enhancing the efficiency of the search operation.

## Description

The present invention is directed in general to an improved method for manipulation of multimedia presentations in a data processing system and in particular to an improved method and system for performing a search for a selected segment within a multimedia presentation in a data processing system. Still more particularly, the present invention relates to an improved method and system for performing a search within a multimedia presentation utilizing an audible search pattern.

In a modern data processing system information is often conveyed to a user in a so-called "multimedia" presentation. That is, information is conveyed utilizing a multitude of media including audio, graphical, text and the like. The complexity of a presentation including such a multitude of media makes it difficult for a user who wishes to traverse the presentation to a specified location within the presentation. The problem of capturing and synchronizing images, audio, graphical and text presentations within a single multimedia presentation makes it quite difficult to accomplish this otherwise simple task.

The Society of Motion Picture and Television Engineers (SMPTE) has provided an industry-standard technique for timing multimedia events which involves integrating SMPTE time codes with the presentation of a multimedia output. By integrating time code generation with the presentation of a multimedia presentation and thereafter editing the presentation utilizing these time codes, it is possible to edit, capture, and present a multimedia presentation in a well controlled manner; however, in order to utilize such a technique to locate a particular segment within a multimedia presentation the user must know the exact location of the segment in terms of its associated time code and must have available a mechanism which permits the presentation to be advanced to that particular time code location.

One example of such a technique is described in the International Business Machines Corporation Technical Disclosure Bulletin Volume 33, No. 10A, March 1991, which describes a process for automating the search for specific segments of continuously recorded data by creating a transcription of word and frame locations to form a database which is stored in memory and thereafter utilized to facilitate automated searches. To retrieve data within the multimedia presentation utilizing this system, the user searches the database by invoking a word or phrase argument which is then correlated with specific frame-location markers within the presentation utilizing the preestablished database. While this technique permits relatively efficient searching through a multimedia presentation to locate a particular word or phrase, it requires that a database for all words and phrases within such a presentation be preestablished and coordinated with a frame location indication for the entire presentation.

The search approach described above may only be accomplished by providing a digital counter calibration in conjunction with all elements of the multimedia presentation. Therefore, the user must know selected offset values of the counter in order to correlate a scene to an appropriate counter value. This problem may be further compounded when several individuals are utilizing a presentation correlation device and one user may therefore disrupt the calibration of such a counter which is being utilized by a second user.

It should therefore be apparent that a need exists for a method and system which permits the efficient searching through a multimedia presentation to locate a specific portion thereof without requiring pre-processing of the presentation and accurate correlation between the presentation and an artificially created counter or digital locator.

It is therefore one object of the present invention to provide an improved method for manipulation of multimedia presentations within a data processing system.

It is another object of the present invention to provide an improved method and system for performing a search for a selected segment within a multimedia presentation in a data processing system.

It is yet another object of the present invention to provide an improved method and system for performing a search for a selected segment within a multimedia presentation which utilizes an audible search pattern.

The foregoing objects are achieved as is now described. The method and system of the present invention permit a rapid and efficient search for a selected segment in a multimedia presentation. An audible utterance to be utilized as a search pattern is identified by a user, either verbally or textually. A text-to-speech conversion is utilized to create an audible search pattern from textual entries. Thereafter, various attributes of the audible utterance may be varied or edited by the user to broaden the effective search pattern. Additionally, the user may specify additional search characteristics, such as maximum amplitude or frequency, to be combined with the search pattern in a Boolean logic relationship in order to further characterize the search pattern. Thereafter, the search pattern may be utilized to identify and locate specific audio utterances within a multimedia presentation. Alternately, the search pattern may be inverted and utilized to search the multimedia presentation in a reverse presentation order, greatly enhancing the efficiency of the search operation.

The above as well as additional objects, features, and advantages of the present invention will become apparent in the following detailed written description.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 is a pictorial representation of a data processing system which may be utilized to implement the method and system of the present invention;
Figure 2 is a pictorial representation of a display screen of the data processing system of Figure 1, which may be utilized to implement the method and system of the present invention;
Figure 3 is a high level block diagram of the data processing system of Figure 1;
Figure 4 is a pictorial representation of an audible search pattern created in accordance with the method and system of the present invention;
Figure 5 is a pictorial representation of a modified search pattern created in accordance with the method and system of the present invention;
Figure 6 is a high level logic flowchart illustrating the creation of an audible search pattern in accordance with the method and system of the present invention;
Figure 7 is a high level logic flowchart illustrating a search of an entire multimedia presentation utilizing an audible search pattern created in accordance with the method and system of the present invention; and
Figure 8 is a high level logic flowchart illustrating a search of a selected portion of a multimedia presentation utilizing an audible search pattern created in accordance with the method and system of the present invention.

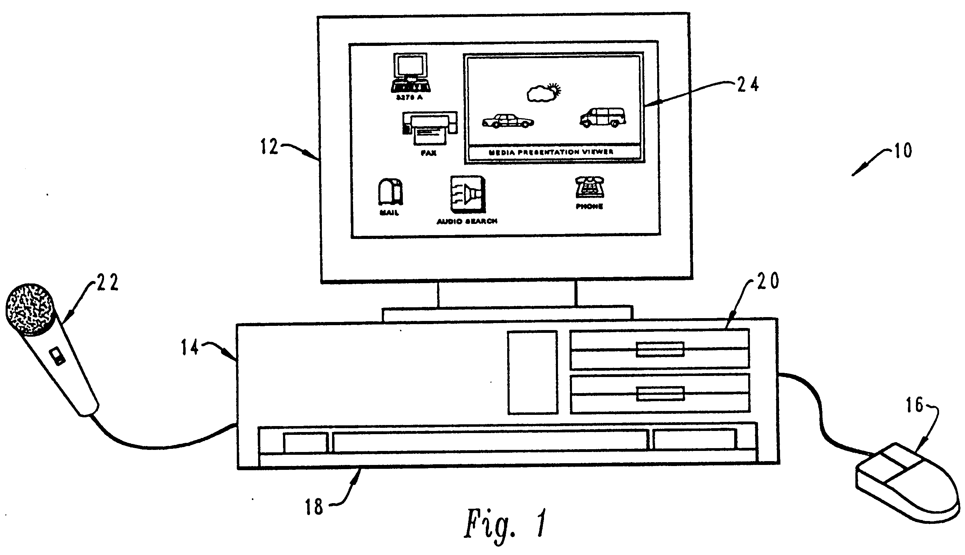

With reference now to the figures and in particular with reference to Figure 1, there is depicted a pictorial representation of a data processing system 10 which may be utilized to implement the method and system of the present invention. As illustrated, data processing system 10 preferably includes a display 12 and a processor 14. Additionally, data processing system 10 may also include a graphical pointer 16 which may be implemented utilizing any known graphical pointing device, such as a mouse. A keyboard 18 is also provided for utilization by the user to create textual search pattern inputs, in a manner which will be described in greater detail herein. Data processing system 10 preferably includes one or more diskette drives 20. Upon reference to the foregoing those skilled in the art will appreciate that data processing system 10 may be implemented utilizing any so-called "personal" computer capable of manipulating and displaying a multimedia presentation. One example of such a data processing system is the International Business Machines Corporation PS/2 personal computer.

As illustrated within Figure 1, data processing system 10 is capable of producing a multimedia presentation within display screen 24 of display device 12. Additionally, in a manner which will be explained in greater detail herein, a microphone 22 may also be utilized in conjunction with data processing system 10 to create an audible search pattern for utilization in accordance with the method and system of the present invention.

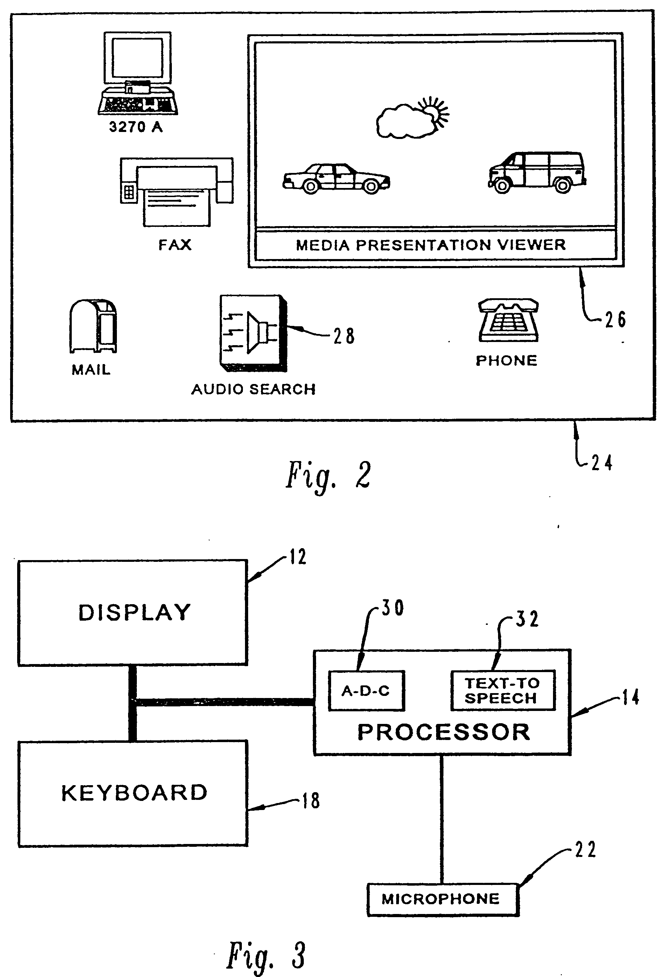

Referring now to Figure 2, there is depicted a pictorial representation of display screen 24 of data processing system 10 of Figure 1. As illustrated, display screen 24 preferably includes a multimedia presentation viewer 26 which, in the depicted embodiment of the present invention, represents a designated area within display screen 24 within which a multimedia presentation may be viewed. Those skilled in the art will appreciate that the presentation of a multimedia presentation within an area of display screen 24 may be accomplished utilizing captured bitmaps from live video, or the interleaving of video presentation matter with the textual and graphic presentations normally viewed within display screen 24. Additionally, display screen 24 preferably includes a plurality of graphic representations or icons which each represent a feature or application which may be invoked within data processing system 10. In particular, an audio search pattern icon 28 is depicted and selection of this icon will, in a manner which will be explained in greater detail herein, permit a user to create and modify an audio search pattern for utilization in searching for a selected segment in a multimedia presentation which is being viewed within multimedia presentation viewer 26.

With reference now to Figure 3, there is depicted a high level block diagram of data processing system 10 of Figure 1. As illustrated, display 12, keyboard 18, and processor 14 are all interrelated in a manner well known to those having ordinary skill in the personal computer art. Additionally, as depicted, microphone 22 is coupled to processor 14 and the method and system of the present invention may be utilized to create an audible search pattern by capturing an audible utterance utilizing microphone 22 which may then be coupled to analog-to-digital converter 30 for conversion into digital data samples, in a manner well known in the art. Thus, the user of data processing system 10 may speak or play an audible utterance into microphone 22, and have that utterance converted into a digital representation, utilizing well known analog-to-digital conversion techniques, for subsequent creation of an audible search pattern in accordance with the method and system of the present invention. Alternately, an audible search pattern may be created in accordance with the method and system of the present invention by typing a textual phrase into keyboard 18 and having that phrase converted into a digital representation of an audible utterance, utilizing text-to-speech converter 32. Those skilled in the synthetic speech arts will appreciate that several very excellent text-to-speech converters exist which are capable of creating an audible utterance from a textual input, in the manner described.

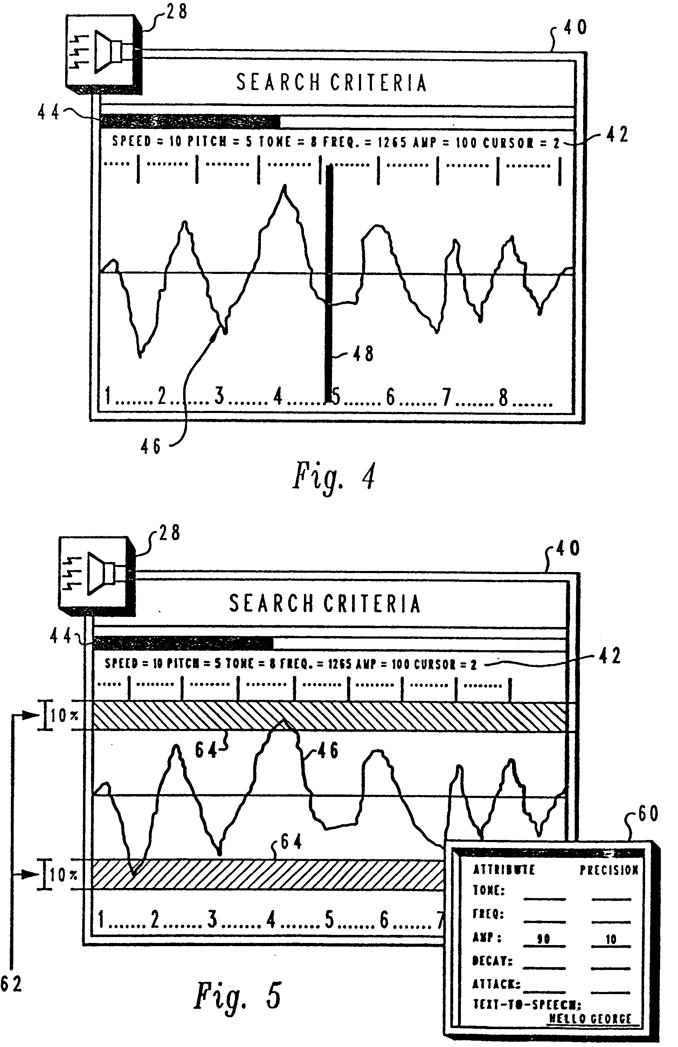

Referring now to Figure 4, there is depicted a pictorial representation of an audible search pattern created in accordance with the method and system of the present invention. As illustrated, Figure 4 depicts a search pattern window 40 which may be invoked upon a selection of audio search pattern icon 28, in a manner well known to those having experience with graphical user interfaces. Search pattern window 40 preferably includes a status line 42 which may be utilized to indicate, in a textual manner, the status of an audible search pattern at any time point within search pattern window 40. Similarly, a time indicator 44 is provided and may be utilized to graphically indicate the progress of time within search pattern window 40. Thus, upon reference to the foregoing, those skilled in the art will appreciate that search pattern window 40 may be utilized to visually depict an audible search pattern which has been created by capturing an audible phrase and converting that phrase into digital representation, or by typing a particular phrase utilizing keyboard 18 and converting that textual entry into an audible output, utilizing text-to-speech converter 32. Thus, as illustrated within Figure 4, an audible search pattern 46 may be created, utilizing either audible utterances or textual entries and examined at any point within the period of time represented by search pattern window 40, utilizing cursor 48.

Upon reference to the foregoing those skilled in the art will appreciate that the method and system of the present invention thus provides a natural and intuitive technique to permit a user to search for a selected segment within a multimedia presentation. For example, it is both natural and intuitive for a user to specify a particular scene within a multimedia presentation by identifying audible utterances which are contained within that scene. For example, a user may specify a desire to repeat the presentation of a scene wherein the phrase "Hello George" has been uttered. By either capturing the phrase "Hello George" or typing that phrase at keyboard 18, an audible search pattern, such as search pattern 46, may be created within a search pattern window 40 and utilized, in a manner which will be described in greater detail herein, to selectively search through a multimedia presentation to locate any occurrence within that presentation which matches the audible characteristics set forth within the audible search pattern.

Next, with reference to Figure 5, there is depicted an important feature of the present invention in which a search pattern created in the manner described above may be selectively modified by a user, in accordance with the method and system of the present invention. By presenting the mechanism depicted within Figure 5, a user may manipulate and/or modify an audible search pattern in a manner similar to that which exists in current audio editors. For example, International Business Machines Corporation Technical Disclosure Bulletin, Volume 31, No. 9, February 1989, discloses a screen format for a basic audio editor which permits the user to select or create an audio object to be processed utilizing a visual and intuitive technique.

By invoking an attribute window 60, in the manner depicted within Figure 5, the user may select a particular attribute such as: tone; frequency; amplitude; decay; or attack, and enter a desired precision for each attribute, such that a variable margin may be created to encompass audible patterns within the multimedia presentation during the search process. As depicted within Figure 5, the attribute selected is an "amplitude" of 90 and the precision of plus or minus 10% has been selected by the user. Thus, as illustrated at reference numeral 62, an attribute variation band may be created which specifies the amount of variation which will be permitted for a particular attribute during the search process.

Additionally, in accordance with another important feature of the present invention, the various attributes specified within attribute window 60 may be combined with the search pattern in a Boolean logic operation. For example, the frequency of a search pattern may be specified as 18,000 hertz, plus or minus 1,000 hertz AND an amplitude of 128 plus or minus 12 OR an amplitude of 60, plus or minus 10. In this manner, the user may, with very little practice, modify a created audible search pattern to permit variations within the multimedia presentation to be encompassed within that search pattern during a search operation.

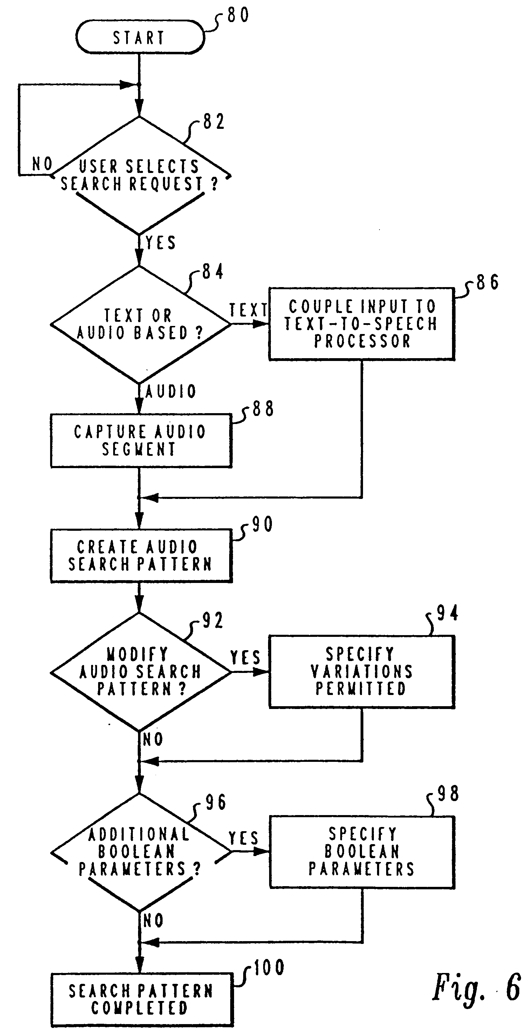

Referring now to Figure 6, there is depicted a high level logic flowchart illustrating the creation of an audible search pattern in accordance with the method and system of the present invention as described above. The process begins at block 80 and thereafter passes to block 82. Block 82 illustrates a determination of whether or not the user has selected a search request. If not, the process merely iterates until such time as a search request has been selected. Still referring to block 82, in the event the user has selected a search request, the process passes to block 84. Block 84 illustrates a determination of whether or not the search request is audio or text based. As described above, if the search request is text based the process passes to block 86. Block 86 illustrates the coupling of a user input to a text-to-speech processor for conversion into an audible presentation which may be utilized to create a search pattern.

Still referring to block 84, in the event the user has selected an audio based search request, block 88 illustrates the capturing of a desired audio segment utilizing microphone 22 (see Figure 1) and analog-to-digital converter 28. Thereafter, the desired audio search pattern is created, as depicted at block 90, utilizing either a captured and converted audio segment or a created audio segment which has been created utilizing a text-to-speech processor.

Next, the process passes to block 92. Block 92 illustrates a determination of whether or not the user desires to modify the audio search pattern from the state of creation. If so, the process passes to block 94. Block 94 depicts the specifying of variations permitted from the audio search pattern, as selected by the user, utilizing attribute window 60 in the manner described above. Thereafter, or after determining that no modification of the audio search pattern is desired, the process passes to block 96.

Block 96 illustrates a determination of whether or not the user desires to specify additional Boolean parameters to be utilized in conjunction with the audio search pattern. If so, the process passes to block 98 which illustrates the specifying of particular Boolean parameters for utilization with the audio search pattern and thereafter, or after determining that no additional Boolean search parameters are required, the process passes to block 100. block 100 illustrates the completion of the creation of a search pattern which may then be utilized to search for selected audio segments within the multimedia presentation, for a particular scene within that presentation, in accordance with method and system of the present invention.

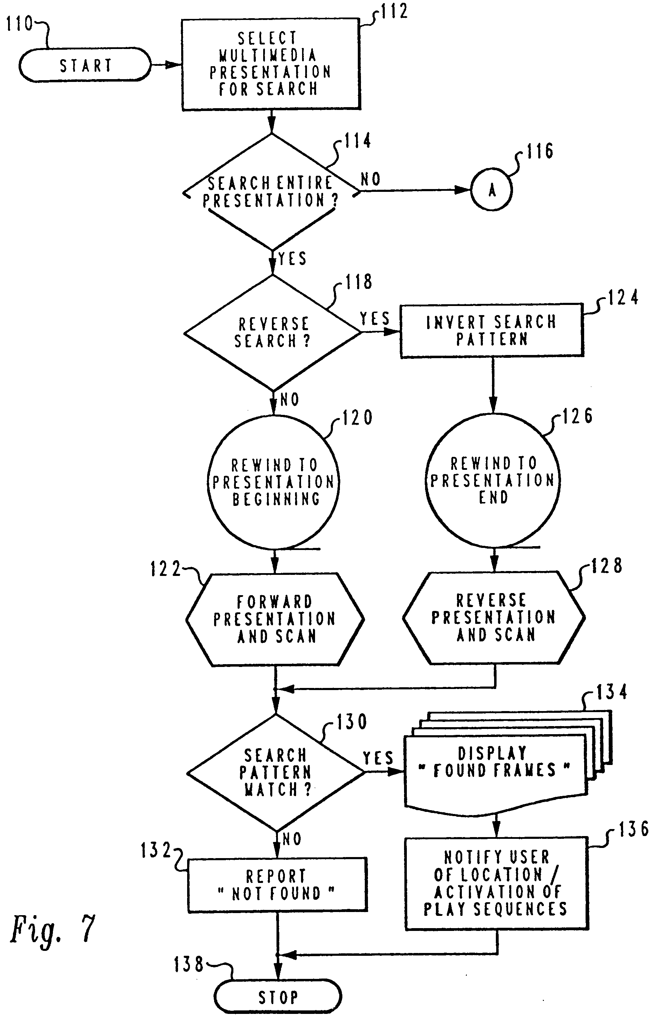

With reference now to Figure 7, there is depicted a high level logic flowchart which illustrates a search through a multimedia presentation utilizing an audible search pattern which has been created in accordance with the method and system of the present invention. As depicted, this process begins at block 110 and thereafter passes to block 112. Block 112 illustrates the selection of a particular multimedia presentation to be searched. Next, the process passes to block 114 which depicts a determination of whether or not the entire presentation is to be searched. If not, the process passes to connector A, as illustrated at reference numeral 116, to search only a portion of the presentation, in a manner which will be described in greater detail below.

Still referring to block 114, in the event the user desires to search an entire presentation, the process passes to block 118. Block 118, in accordance with an important feature of the present invention, illustrates a determination of whether or not a reverse search is desired. In accordance with the method and system of the present invention a "reverse" search is utilized to search through the multimedia presentation in a reverse manner. That is, a manner opposite to the direction normally utilized when viewing the multimedia presentation. Those skilled in the art will, upon reference to the foregoing, appreciate that a reverse search technique will be especially efficient when the multimedia presentation has recently been viewed and it is desired to search through the multimedia presentation in a reverse order, rather than rewinding the presentation to the beginning and originating the search at the beginning of the presentation.

Still referring to block 118, in the event a reverse search is not desired, the process passes to block 120. Block 120 illustrates the rewinding of the presentation to the beginning. Of course, those skilled in the art will appreciate that the term "rewind" is an analog term and may not be strictly appropriate when utilized in conjunction with a digital presentation; however, the concept of "rewind" is a term of art in the multimedia presentation arts and will be understood by those having skill in this art to mean the returning of the presentation to the origination point within that presentation. Next, the process passes to block 122 which depicts the forward presentation of the multimedia presentation and the scanning of that presentation for audio segments therein which match the audible search pattern.

Referring again to block 118, in the event a reverse search is desired, the process passes to block 124. Block 124 illustrates the chronological inversion of the search pattern which was created in accordance with the method described with respect to Figures 4 and 5 and thereafter, the process the passes to block 126. Block 126 illustrates the "rewinding" or fast forwarding of the presentation to the end of the presentation and the process then passes to block 128. Block 128 illustrates the reverse presentation of the multimedia presentation and the scanning of audio segments therein for a segment which matches the inverted search pattern created in accordance with the method described with respect to Figures 4 and 5.

With reference now to block 130, a determination is illustrated as to whether or not an audio segment within the multimedia presentation has matched or not matched, the search pattern which has been created. If no segment has been found within the multimedia presentation which matches the search pattern created in accordance with the method and system of the present invention, the process passes to block 132. Block 132 illustrates the reporting of "Not Found" and the process then terminates, as depicted at block 138. Referring again to block 130, in the event an audible segment is found which matches the audible search pattern created in accordance with the method and system of the present invention the location of that audio segment is displayed as a "Found Frame," as depicted within block 134 and, the process then passes to block 136. Block 136 illustrates the notifying of the user of the location and/or the activation of play sequences for the located frames. Thereafter, the process passes to block 138 and terminates.

Upon reference to the foregoing those skilled in the art will appreciate that, by following the steps described within the flowchart of Figure 7, a multimedia presentation may be scanned in either a forward or reverse manner to locate each audio segment therein which matches the audible search pattern created in accordance with the method and system of the present invention as described above.

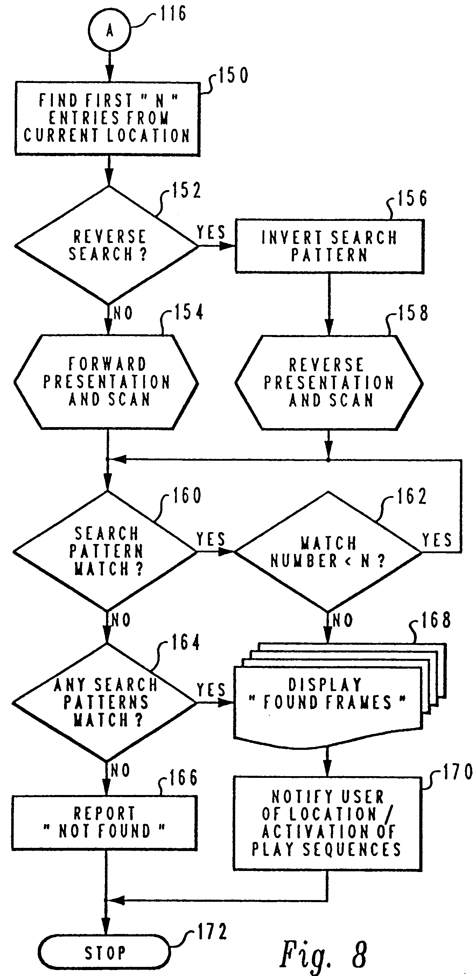

Finally, referring to Figure 8, there is depicted a high level logic flowchart which illustrates a search through a selected portion of a multimedia presentation utilizing an audible search pattern created in accordance with the method and system of the present invention. As illustrated, this process begins after a determination within Figure 7, at block 114, that a search of the entire multimedia presentation if not desired. Next, the process passes to block 150, which illustrates a determination that the user has indicated a desire to locate the first "N" entries from the current location within the multimedia presentation. Of course, those skilled in the art will appreciate that the parameters of the search may be entered or varied by the user, in a manner well known to those having ordinary skill in the art.

Next, the process passes to block 152. Block 152 illustrates a determination of whether or not a reverse search is desired. As described above, the method and system of the present invention permits a user to search through a multimedia presentation in reverse order, obviating the requirement of rewinding the presentation and scanning in a forward manner in the technique utilized by all known search methods. If a reverse search is not desired, as depicted at block 152, the process passes to block 154. Block 154 illustrates the forward presentation of the multimedia presentation and the scanning of that presentation for audio segments which match the audible search pattern created in the manner described above. Referring again to block 152, in the event a reverse search is desired, the process passes to block 156. Block 156 illustrates the chronological inversion of the search pattern to create a reverse chronologically ordered search pattern and the process then passes to block 158. Block 158 illustrates the reverse presentation of the multimedia presentation and the scanning for audio entries which match the chronologically inverted search pattern created in accordance with the method and system of the present invention.

After initiating either a forward or reverse presentation and the scanning of the presentation for audio segments which match the audible search pattern created in accordance with the method and system of the present invention, the process passes to block 160. Block 160 illustrates a determination of whether or not a search pattern match has been located. If so, the process passes to block 162. Block 162 illustrates a determination of whether or not the match number which has just occurred is less than the specified number of matches entered by the user, as illustrated within block 150. If so, the process returns in an iterative fashion to block 160 to continue to search for additional pattern matches. If the match number is equal to or greater than the specified number of matches entered by the user, as illustrated within block 150 above, the process passes to block 168. Block 168 illustrates the displaying of "Found Frames," wherein the audio segments are listed which match the audible search pattern created above. Alternately, in the event an audible search pattern match is not found, the process passes to block 164. Block 164 illustrates a determination of whether or not any audible segments have been found which match the audible search pattern created in accordance with the method and system of the present invention. If so, as described above, the process passes to block 168 to display "Found Frames" which include the audio segments which match the audible search pattern created in accordance with the method and system of the present invention.

Referring again to block 164, if no audio segment has been found which matches the audible search pattern created in accordance with the method and system of the present invention, the process passes to block 166. Block 166 illustrates the reporting of "Not Found" and the process then passes to block 172 and terminates. Alternately, referring again to block 168, after displaying the "Found Frames" which include audio segments which match the audible search pattern created in accordance with the method and system of the present invention, the process passes to block 170. Block 170 illustrates the notifying of the user of the location and/or the activation of the play sequences which include the located audio segments. Thereafter, as described above, the process passes to block 172 and terminates.

Upon reference to the foregoing those skilled in the art will appreciate that the Applicants herein have created a technique whereby an audible search pattern may be created and modified and/or combined utilizing Boolean logic with various audible attributes to create an entire multimedia presentation or some portion thereof in either a forward or reverse presentation to locate and identify those segments within the multimedia presentation which include an audio segment which matches the audible search pattern created.

## Claims

1. A method in a data processing system for efficiently locating a selected portion of a multimedia presentation wherein said multimedia presentation includes audio elements therein, said method comprising the steps of:
permitting a user to specify an audible utterance which occurs in association with said selected portion of said multimedia presentation;
transforming said identified audible utterance into a search pattern within said data processing system; and
searching said multimedia presentation utilizing said search pattern within said data processing system to locate a portion of said multimedia presentation which includes an audible utterance which is a match for said search pattern.

2. The method in a data processing system for efficiently locating a selected portion of a multimedia presentation according to Claim 1, further including the step of presenting said located portion of said multimedia presentation.

3. The method in a data processing system for efficiently locating a selected portion of a multimedia presentation according to Claim 1, wherein said step of permitting a user to specify an audible utterance which occurs in association with said selected portion of said multimedia presentation comprises the step of permitting a user to enter a textual equivalent of said audible utterance within said data processing system.

4. The method in a data processing system for efficiently locating a selected portion of a multimedia presentation according to Claim 3, further including the step of converting said textual equivalent of said audible utterance entered within said data processing system into a phonetic equivalent of said audible utterance.

5. The method in a data processing system for efficiently locating a selected portion of a multimedia presentation according to Claim 4, wherein said step of transforming said identified audible utterance into a search pattern within said data processing system comprises the step of transforming said phonetic equivalent of said audible utterance into a search pattern.

6. The method in a data processing system for efficiently locating a selected portion of a multimedia presentation according to Claim 1, further including the step of permitting said user to specify a maximum permitted deviation from said search pattern for audible utterances which will be considered a match for said search pattern.

7. The method in a data processing system for efficiently locating a selected portion of a multimedia presentation according to Claim 1, further including the step of chronologically reversing said search pattern and searching said multimedia presentation in reverse chronological order.

8. A data processing system for efficiently locating a selected portion of a multimedia presentation wherein said multimedia presentation includes audio elements therein, said data processing system comprising:
means for permitting a user to specify an audible utterance which occurs in association with said selected portion of said multimedia presentation;
means for transforming said identified audible utterance into a search pattern within said data processing system; and
means for searching said multimedia presentation utilizing said search pattern within said data processing system to locate a portion of said multimedia presentation which includes an audible utterance which is a match for said search pattern.

9. The data processing system for efficiently locating a selected portion of a multimedia presentation according to Claim 8, further including means for presenting said located portion of said multimedia presentation.

10. The data processing system for efficiently locating a selected portion of a multimedia presentation according to Claim 8, wherein said means for permitting a user to specify an audible utterance which occurs in association with said selected portion of said multimedia presentation comprises means for permitting a user to enter a textual equivalent of said audible utterance within said data processing system.

11. The data processing system for efficiently locating a selected portion of a multimedia presentation according to Claim 10, further including means for converting said textual equivalent of said audible utterance entered within said data processing system into a phonetic equivalent of said audible utterance.

12. The data processing system for efficiently locating a selected portion of a multimedia presentation according to Claim 11, wherein said means for transforming said identified audible utterance into a search pattern within said data processing system comprises the step of transforming said phonetic equivalent of said audible utterance into a search pattern.

13. The data processing system for efficiently locating a selected portion of a multimedia presentation according to Claim 8, further including means for permitting said user to specify a maximum permitted deviation from said search pattern for audible utterances which will be considered a match for said search pattern.

14. The method in a data processing system for efficiently locating a selected portion of a multimedia presentation according to Claim 1, further including means for chronologically reversing said search pattern and searching said multimedia presentation in reverse chronological order.
